# EUROPÄISCHE PATENTSCHRIFT

(11) **EP 2 981 785 B1**
(45) Veröffentlichungstag und Bekanntmachung des Hinweises auf die Patenterteilung: **07.12.2016**
(21) Anmeldenummer: 14709309.0
(22) Anmeldetag: 12.03.2014
(51) Int. Cl.: G01B 17/02, G01B 11/06

(54) **VERFAHREN ZUR ERMITTLUNG DER SCHICHTDICKE EINER VERBINDUNGSSCHICHT ZWISCHEN ZWEI VERPACKUNGSSCHICHTEN**
METHOD FOR DETERMINING THE LAYER THICKNESS OF A CONNECTING LAYER BETWEEN TWO PACKAGING LAYERS
PROCÉDÉ DE DÉTERMINATION DE L'ÉPAISSEUR D'UNE COUCHE DE LIAISON ENTRE DEUX COUCHES D'EMBALLAGE

(30) Priorität: 04.04.2013 AT 502292013
(43) Veröffentlichungstag der Anmeldung: 10.02.2016
(73) Patentinhaber: Constantia Teich GmbH, 3205 Weinburg (AT); Research Center for Non Destructive Testing GmbH, 4040 Linz (AT)
(72) Erfinder: REITINGER, Bernhard, A-4072 Alkoven (AT); ZAMIRI, Saeid, 4040 Linz (AT); GRÜNSTEIDL, Clemens, 4040 Linz (AT); ROITHER, Jürgen, A-4710 Grieskirchen (AT); KORNFELD, Martin, A-3400 Klosterneuburg (AT); WEGENBERGER, Alfred, A-3550 Langenlois (AT)
(74) Vertreter: Patentanwälte Pinter & Weiss OG
(86) Internationale Anmeldenummer: PCT/EP2014/054773
(87) Internationale Veröffentlichungsnummer: WO 2014/161706

(56) Entgegenhaltungen:
- WO-A1-2012/085131
- US-A1- 2002 134 159
- US-A1- 2004 085 550
- US-A1- 2008 021 673

## Beschreibung

Die gegenständliche Erfindung betrifft ein Verfahren zur Ermittlung der Schichtdicke einer Verbindungsschicht zwischen einer ersten Verpackungsschicht und einer zweiten Verpackungsschicht, wobei die erste Schicht durch einen Laserimpuls beaufschlagt wird und die entstehende Ultraschallwelle an einer Oberfläche der ersten oder zweiten Verpackungsschicht detektiert wird und das über die Zeit detektierte Messsignal zur Ermittlung der Verbindungsschichtdicke ausgewertet wird.

Heutige Verpackungen für Nahrungsmittel oder Tierfutter bestehen häufig aus Behältern, z.B. aus Aluminium oder einem Kunststoffverbund, und einer Deckelfolie, z.B. aus Kunststoff, Aluminium, Papier oder einem Verbund daraus, zum Verschließen des Behälters. Alternativ können auch Beutel aus einer Folie oder einem Folienverbundmaterial hergestellt werden, die nach dem Befüllen an einer Naht verschlossen werden. Zum Verschließen kommt häufig ein Siegelverfahren, wie z.B. ein Heißsiegelverfahren oder ein Ultraschallsiegelverfahren, oder Klebeverfahren zum Einsatz. Zum Siegeln ist sowohl am Behälter, als auch an der Deckelfolie bzw. an beiden Folienbahnen ein Siegelmedium, wie z.B. aus Polyethylen, Polypropylen und/oder deren Copolymeren, aufgebracht, z.B. durch ein Koextrusionsverfahren. Bei Kleben reicht es, wenn nur auf einem Teil ein Kleber aufgebracht ist, wobei natürlich der Kleber auch auf beiden Teilen aufgebracht sein kann.

Im Gegensatz zu den Dicken der Deckelfolie und des Behälters, die im Herstellungsprozess in einem engen Toleranzbereich, und damit quasi konstant, gehalten werden können, unterliegt die sich ergebende Dicke der Siegelschicht oder Kleberschicht prozessbedingt großen Schwankungen. In der Herstellung solcher Verpackungsbehältnisse muss daher im Rahmen der Qualitätssicherung laufend die Siegelschichtdicke oder die Kleberschichtdicke kontrolliert werden. Das erfolgt derzeit z.B. mittels einer mechanischen Messuhr. Dafür muss die Probe aber zuerst mittels einer Säure abgeätzt werden, um die zu messende Schicht freizulegen und um die Dicke der Siegelschicht bzw. der Kleberschicht messen zu können. Solche Verfahren sind aber aufwendig, da mit Säure gearbeitet werden muss und dazu hinsichtlich der Arbeitssicherheit hohe Sicherheitsvorkehrungen zu treffen und einzuhalten sind, und zeitintensiv, da einerseits die Arbeitsschritte Zeit benötigen und andererseits ein hoher Anteil an manueller Arbeit enthalten ist. Die Schichtdicke kann auch durch Computertomographie ermittelt werden, was aber aufgrund des apparativen Aufwands teuer ist.

Daneben sind auch schon berührungslose, auf Laser-Ultraschallspektroskopie basierende Verfahren bekannt geworden. Dazu wird eine Probe mit einem kurzen Laserpuls und damit mit einem breiten Frequenzspektrum beaufschlagt. Durch eine thermoelastische Erwärmung bzw. Ablation der Oberfläche der Probe wird in der Probe eine sich ausbreitende Ultraschallwelle erzeugt, die ebenfalls berührungslos detektiert wird, z.B. durch ein Interferenzverfahren, wie z.B. ein Laser-Doppler-Vibrometer. Die Detektion kann dabei in der Nähe der Anregung, oder auch an einer gegenüberliegenden Oberfläche der Probe erfolgen. Durch Auswertung des Frequenzspektrums des detektierten Signals kann auf bestimmte Eigenschaften der Probe, wie z.B. deren Schichtdicke, rückgeschlossen werden. Ein solches Verfahren beschreibt z.B. die CA 2 314 305 A1 für eine mehrschichtige Probe. Dazu wird ein Modell benötigt, das das Verhalten der mehrschichtigen Probe beschreibt und das zumindest einen gesuchten Parameter, wie z.B. die Dicke einer Schicht, enthält, der die Resonanzfrequenz beeinflusst. Dieser zumindest eine Parameter wird dann mit einer Best-Fit Methode variiert, um eine möglichst gute Übereinstimmung der durch das Modell vorhergesagten Resonanzfrequenzen mit den tatsächlich gemessenen zu erzielen. Die Qualität dieses Verfahren hängt dabei sicherlich am Modell der Probe, wobei für jede Probe auch ein eigenes Modell benötigt wird und damit ein sehr hoher Aufwand notwendig ist. Daneben, benötigt das Verfahren auch einen hohen Rechenaufwand, besonders wenn mehrere Parameter unbekannt sind und ermittelt werden sollen. Bei mehreren unbekannten Parametern steigt zudem die Unsicherheit des Messverfahrens und einhergehend die Standardabweichung jedes zu fittenden Parameters an.

Aus US2008/0021673 A1 ist eine Dickenbestimmung mittels Ultraschallechos bekannt. Z

Es war daher eine Aufgabe der gegenständlichen Erfindung, die Schichtdicke einer Verbindungsschicht zwischen zwei Schichten einer Verpackung auf einfache, sichere, schnelle und zuverlässige Weise zu ermitteln.

Diese Aufgabe wird erfindungsgemäß durch ein verfahren nach Anspruch 1 dadurch gelöst, indem die Laufzeit der Ultraschallwelle durch die erste und zweite Verpackungsschicht vorab bestimmt wird und ein Maximum im Messsignal gesucht wird und der Zeitpunkt des Auftretens dieses Maximums als Gesamtlaufzeit der Ultraschallwelle ermittelt wird und dann die Laufzeit der Ultraschallwelle durch die erste und zweite Verpackungsschicht von der Gesamtlaufzeit abgezogen wird und aus der bekannten Ultraschallgeschwindigkeit in der Verbindungsschicht auf die Verbindungsschichtdicke rückgeschlossen wird. Durch die Nutzung von vorhandenem a priori Wissen kann die Ermittlung der Dicke der Verbindungsschicht sehr einfach und schnell erfolgen, ohne aufwendige Signalauswertungen und Berechnungen durchführen zu müssen. Das ermöglich auch die Messung an sehr vielen Messpunkten in kurzer Zeit.

Die Suche nach dem Maxima kann in einer ersten Methode durch Kreuzkorrelation mit einem bekannten Signalmuster erfolgen, oder durch eine zweite Methode mittels a priori Wissen, wenn im Bereich der Gesamtlaufzeit ein Zeitfenster definiert wird und das Maximum innerhalb dieses Zeitfensters gesucht wird. Ohne a priori Wissen kann die Suche nach dem ersten lokalen Maximum in einer dritten Methode erfolgen, indem im Messsignal vor der ersten zu erwartenden Signalankunft das Rauschen in Spektrum und Rauschleistung analysiert wird, um einen Schwellwert in Amplitude und Anstiegszeit zu finden. Mit Hilfe dieser Schwellwerte, kann das erste lokale Maxima ermittelt werden. Diese dritte Methode beinhaltet gewisse Fehlerquellen, wie z.B. durch hochfrequente Einstreuungen verursachte Spannungsspitzen, welche falsch interpretiert werden können, hat jedoch den großen Vorteil ohne a priori Wissen eine Maximumsuche zuzulassen.

Um statistische Messwertschwankungen auszugleichen, kann vorgesehen sein, innerhalb eines Messrasters eine Vielzahl von Einzelmessungen durchzuführen und zur Ermittlung der Verbindungsschichtdicke über diese Einzelmessungen zu mitteln. Durch das erfindungsgemäße Messverfahren können die erforderlichen Einzelmessungen in sehr kurzer Zeit durchführt werden.

Um Bereiche unterschiedlicher Oberflächenstruktur, z.B. eine Prägung in einer Verpackungsschicht, richtig erfassen zu können, kann aus den ermittelten Maxima der Einzelmessungen ein Histogramm der zugehörigen Laufzeiten erstellt werden, aus denen Bereiche unterschiedlicher Oberflächenstruktur ermittelt werden können. Daraus kann dann für zumindest eine ermittelte Oberflächenstruktur die Verbindungsschichtdicke ermittelt werden.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt
Fig.1 eine schematische, erfindungsgemäße Messanordnung,
Fig.2 ein aufgenommenes Messsignal der erzeugten Ultraschallwelle,
Fig.3 die Messung an verschiedenen Messstellen mit jeweils einer Vielzahl von Messpunkten und
Fig.4 und 5 die Messung und Auswertung bei einer strukturierten Verpackungsschicht.

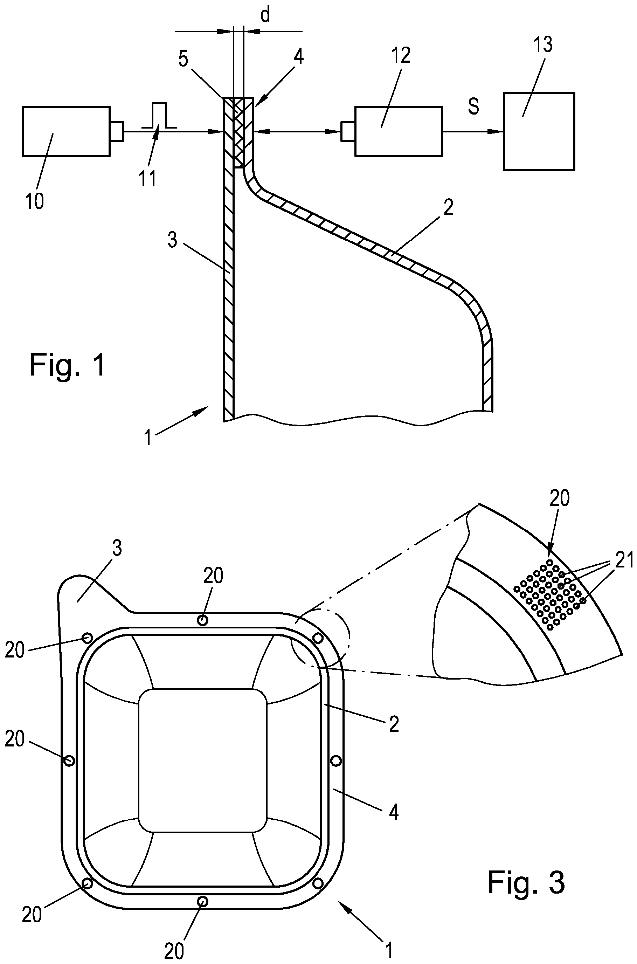

In Fig.1 ist schematisch und stark vereinfacht ein Aufbau zur Ermittlung der Verbindungsschichtdicke an einer Verpackung 1 gezeigt. Die Verpackung besteht aus einer ersten Verpackungsschicht 2, z.B. einem Behälter, wie z.B. eine Schale, und einer zweiten Verpackungsschicht 3, wie z.B. eine Deckelfolie. An der ersten Verpackungsschicht 2 ist hier an einem umlaufenden Rand ein Randbereich 4 vorgesehen, an dem die zweite Verpackungsschicht 3 an der ersten Verpackungsschicht 2 befestigt werden kann. Die Verpackung könnte aber natürlich auch in Form eines Beutels oder ähnlichem ausgestaltet sein, die im Bereich einer Verbindungsnaht mit einander verbunden werden. Die erste Verpackungsschicht 2 kann z.B. aus Papier, Aluminium oder aus einem Kunststoff oder einem Verbund dieser Materialien in Form einer mehrschichtigen Folie hergestellt sein. Die zweite Verpackungsschicht 3 kann aus Papier, Aluminium oder einem Kunststoff oder einem Verbund aus diesem Materialien in Form einer mehrschichtigen Folie hergestellt sein. Die erste und/oder die zweite Verpackungsschicht 2, 3 kann an einer Seite, bevorzugt jeweils die freie, sichtbare Fläche, auch bedruckt sein und/oder an einer Seite, bevorzugt die dem Inneren der Verpackung 1 zugewandte Seite, metallisiert sein.

Zur Verbindung der beiden Verpackungsschichten 2, 3 ist eine Verbindungsschicht 5, z.B. eine Siegelschicht oder eine Kleberschicht, vorgesehen. Zur Messung der Dicke d der Verbindungsschicht 5, wird hier eine Seite der zweiten Verpackungsschicht 3 mit einem Anregungslaser 10 durch einen kurzen Laserimpuls 11, vorzugsgweise mit einer Pulsdauer <1ns, angeregt. Durch den kurzen Laserimpuls 11 wird in der Verpackung 1 eine breitbandige Ultraschallwelle erzeugt, die sich in der Verpackung 1 ausbreitet. Diese Ultraschallwelle wird nach Durchlaufen der zweiten Verpackungsschicht 3, der Verbindungsschicht 5 und der ersten Verpackungsschicht 2 an der Oberfläche der ersten Verpackungsschicht 2, also der Anregung gegenüber, mit einem Detektor 12 detektiert. Der Detektor 12 kann aber auch so angeordnet sein, dass dieser die reflektierte Ultraschallwelle an der Oberfläche der zweiten Verpackungsschicht 3, also auf derselben Seite wie die Anregung, detektiert.

Der Detektor 12 kann als Interferometer, z.B. als bekanntes Fabry-Perot-Interferometer, als homodynes oder heterodynes Michelson- oder Mach-Zehnder-Interferometer, als photorefraktives Interferometer, oder ähnliches, ausgeführt werden. Mit diesem wird die durch die Ultraschallwelle hervorgerufene Schwingung der Oberfläche der ersten oder zweiten Verpackungsschicht 2, 3 detektiert und erfasst. Der Aufbau, die Komponenten und die Funktion solcher Interferometer sind an sich hinlänglich bekannt, sodass hier darauf nicht im Detail eingegangen wird. Der Detektor 12 liefert ein Messsignal S an eine Auswerteeinheit 13.

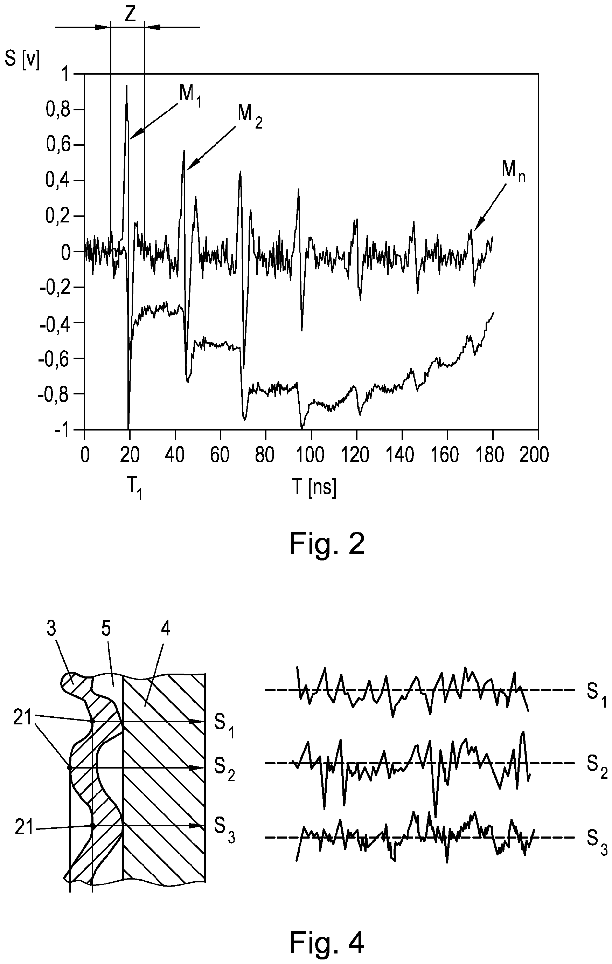

Das derart aufgenommene Messsignal S ist z.B. in Fig.2 dargestellt. Darin zeigt die untere Kurve das Rohsignal und die obere das, z.B. in einem Bandpass, gefilterte bzw. aufbereitete Rohsignal. Man erkennt im Messsignal S eindeutige Maxima Mₙ, nämlich ein erstes Maximum M₁ nach ca. 20ns, und weitere darauf folgende, abgeschwächte Maxima M₂ ... Mₙ, die aufgrund des Echos der Ultraschallwelle in der Verpackung 1 hervorgerufen werden. Zur Ermittlung der Dicke d der Verbindungsschicht 5 werden die Laufzeiten T dieser Maxima Mₙ ausgewertet. Bevorzugt wird dabei das erste, signalstärkste Maximum M₁ herangezogen, wobei auch jedes andere Maximum verwendet werden kann.

Dazu werden die Laufzeiten der Ultraschallwelle in der ersten und zweiten Verpackungsschicht 2, 3 vorab bestimmt. Das erfolgt durch Referenzmessungen oder rechnerisch aus den bekannten physikalischen Materialeigenschaften. Damit ist bekannt, wie lange die Ultraschallwelle benötigt, um die Verpackungsschichten 2, 3 zu durchlaufen. Nachdem die Verpackungsschichten sehr genau und konstant, sowohl hinsichtlich der Dicken, als auch hinsichtlich der Materialeigenschaften, hergestellt werden können, können diese daher als quasi konstant angenommen werden. Es muss daher aus dem Messsignal die Gesamtlaufzeit T₁ der Ultraschallwelle durch die Verpackung 1 an der zu messenden Stelle bestimmt werden.

Dafür wird im Messsignal S der Zeitpunkt des Auftretens eines Maximums M, bevorzugt das erste Maximum M₁, gesucht, der der Gesamtlaufzeit T₁ der Ultraschallwelle durch die Verpackung 1 entspricht.

Zur Maximumsuche bieten sich bekannte Verfahren an, wie z.B. die Kreuzkorrelation mit bekanntem Signalmuster (Stand der Technik bei Radaranwendungen, GPS, Ultraschall, etc.), eine Maximumsuche innerhalb gewisser Grenzen, oder die Suche nach dem ersten lokalen Maximum, indem im Messsignal S vor der ersten zu erwartenden Signalankunft das Rauschen in Spektrum und Rauschleistung analysiert wird, um einen Schwellwert in Amplitude und Anstiegszeit zu finden. Mit Hilfe dieser Schwellwerte, kann das erste lokale Maxima ermittelt werden ohne a priori Wissen über das Messsignal S.

Von der Gesamtlaufzeit T₁ werden die bekannten Laufzeiten T₂, T₃ der ersten und zweiten Verpackungsschicht 2, 3 abgezogen, womit die Laufzeit Tₛ durch die Verbindungsschicht 5 verbleibt. Aus dieser Laufzeit Tₛ kann dann auf die Dicke d der Verbindungsschicht 5 rückgeschlossen werden. Die Ausbreitungsgeschwindigkeit vₛ der Ultraschallwelle durch das Material der Verbindungsschicht 5 ist entweder bekannt, oder kann aus Referenzmessungen bestimmt werden. Mit der Ausbreitungsgeschwindigkeit vₛ kann dann aus der ermittelten Laufzeit Tₛ direkt die Dicke d der Verbindungsschicht 5 berechnet werden, z.B. in der Form *d = TS - vs* mit *Tₛ = T₁-T₂-T₃.* D.h. zur Ermittlung der Dicke d der Verbindungsschicht 5 wird auf a priori vorhandenes Wissen über die Verpackung 1 zurückgegriffen.

Dieses vorhandene a priori Wissen kann aber auch verwendet werden, um die Maximumsuche zu vereinfachen und damit die Ermittlung der Dicke d der Verbindungsschicht 5 zu beschleunigen. Z.B. kann anhand der als bekannt anzusehenden Laufzeiten T₂, T₃ in der ersten und zweiten Verpackungsschicht 2, 3 ein Zeitfenster Z definiert werden, innerhalb der das Auftreten eines Maximums zu erwarten ist, siehe Fig.2, und die Maximumsuche, z.B. mittels Kreuzkorrelation, kann dann auf dieses Zeitfenster Z beschränkt werden. Nachdem die ungefähre Dicke d der Verbindungsschicht 5 bzw. ein Bereich der möglichen Dicke d aus dem Produktionsprozess bekannt ist, kann das Zeitfenster Z einfach bestimmt werden. Die Maximumsuche kann sich dann auf dieses Zeitfenster Z beschränken.

Ohne a priori Wissen kann die Suche nach dem ersten lokalen Maximum erfolgen, indem im Messsignal S vor der ersten zu erwartenden Signalankunft (siehe Fig.2, t<10ns) das Rauschen in Spektrum und Rauschleistung analysiert wird, um einen Schwellwert in Amplitude und Anstiegszeit zu finden. Mit Hilfe dieser Schwellwerte, kann das erste lokale Maxima M₁ ermittelt werden.

Eine Verbesserung der Auswertung kann auch erzielt werden, wenn die Bestimmung der Dicke d der Verbindungsschicht 5 nicht anhand einer Einzelmessung erfolgt, sondern anhand einer Vielzahl von Messungen, wie in Fig. 3 dargestellt. Im Bereich der Verbindungsschicht 5, hier z.B. im Randbereich 4 des Behälters der Verpackung 1, werden eine Anzahl von Messbereichen 20, z.B. ein Bereich von jeweils 1,5mm x 1,5mm, definiert. In jedem Messbereich 20 sind eine Vielzahl von Messpunkten 21 vorgesehen, die z.B. in einem Messraster mit einem Abstand zwischen den Messpunkten 21 von 50μm angeordnet sind. In jedem Messpunkt 21 wird die lokale Dicke der Verbindungsschicht 5 ermittelt und die einzelnen lokalen Dicken werden dann zur Bestimmung der Dicke d der Verbindungsschicht 5 für den jeweiligen Messbereich 20 gemittelt.

Dazu kann vorgesehen sein, dass die Verpackung 1 in einer Ebene normal auf den Anregungslaserstrahl beweglich angeordnet ist, z.B. eingespannt auf einem in dieser Ebene über angetriebene Linearführungen beweglichen Schlitten. Die Verpackung 1 wird dann für die Einzelmessungen über eine geeignete Steuerung, z.B. integriert in der Auswerteeinheit 13, entsprechend positioniert. Alternativ oder zusätzlich könnte auch der Anregungslaser 10 und der Detektor 12 beweglich angeordnet sein. Aufgrund der Verwendung von hochenergetischen Lasern, muss die Vorrichtung natürlich auch den vorgesehenen Sicherheitsbestimmungen genügen.

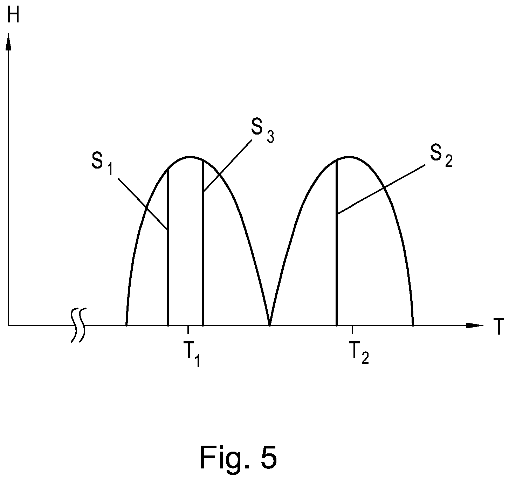

Es ist weiters möglich, dass eine Verpackungsschicht 3 eine Oberflächenstruktur, z.B. eine Prägung, aufweist, wie in Fig.4 dargestellt. Aufgrund dieser Oberflächenstruktur können die lokalen Dicken d der Verbindungsschicht 5 schwanken. Durch eine Mittelung wie vorhin beschrieben, würde sich dann eine falsche Dicke d der Verbindungsschicht 5 ergeben. Um das zu verhindern, werden die Gesamtlaufzeiten T₁ (oder schon die Laufzeit Tₛ durch die Verbindungsschicht 5) aus den Einzelmessungen an den Messpunkten 21 in einem Histogramm aufgetragen, wie in Fig.5 dargestellt. Dazu werden bekanntermaßen Intervalle der Gesamtlaufzeiten T₁ bestimmt und die Häufigkeit H ermittelt, wieviele Messungen in die jeweiligen Intervalle fallen. Aus dem Histogramm können dann Bereiche mit unterschiedlicher Oberflächenstruktur bestimmt werden, zu denen jeweils ein Bereich von Laufzeiten gehört. Entweder kann daraus eine mittlere Laufzeit T₁₁, T₁₂ für jeden Bereich und daraus die Dicke d der Verbindungsschicht 5 für die Bereiche mit unterschiedlicher Oberflächenstruktur ermittelt werden, oder die Einzelmessungen werden verschiedenen Bereichen zugeordnet und es erfolgt wieder eine Mittelwertbildung wie oben beschrieben.

## Patentansprüche

1. Verfahren zur Ermittlung der Schichtdicke (d) einer Verbindungsschicht (5) zwischen einer ersten Verpackungsschicht (2) und einer zweiten Verpackungsschicht (3), wobei die erste Verpackungsschicht (2) durch einen Laserimpuls (11) beaufschlagt wird und die entstehende Ultraschallwelle an einer Oberfläche der ersten oder zweiten Verpackungsschicht (2, 3) detektiert wird und das über die Zeit (T) detektierte Messsignal (S) zur Ermittlung der Verbindungsschichtdicke (d) ausgewertet wird, **dadurch gekennzeichnet, dass** die Laufzeit der Ultraschallwelle durch die erste und zweite Verpackungsschicht (2, 3) vorab bestimmt wird und ein Maximum (M₁, M₂, Mₙ) im Messsignal (S) gesucht wird und der Zeitpunkt des Auftretens dieses Maximums (M₁, M₂, Mₙ) als Gesamtlaufzeit (T₁, T₂, Tₙ) der Ultraschallwelle ermittelt r wird, wobei die Gesamtlaufzeit die Laufzeit zum Durchlaufen der beiden Verpackungsschichten und der Verbindungsschicht ist, **und dass** die Laufzeit der Ultraschallwelle durch die erste und zweite Verpackungsschicht (2, 3) von der Gesamtlaufzeit (T₁, T₂, Tₙ) abgezogen wird und daraus zusammen mit der bekannten Ultraschallgeschwindigkeit (vₛ) in der Verbindungsschicht (5) auf die Verbindungsschichtdicke (d) rückgeschlossen wird.

2. Verfahren nach Anspruch 1, **dadurch gekennzeichnet, dass** im Bereich der Gesamtlaufzeit (T₁, T₂, Tₙ) ein Zeitfenster (Z) definiert wird und das Maximum (M₁, M₂, Mₙ) innerhalb dieses Zeitfensters (Z) gesucht wird.

3. Verfahren nach Anspruch 1 oder 2, **dadurch gekennzeichnet, dass** das Maximum (M₁, M₂, Mₙ) durch Kreuzkorrelation mit einem bekannten Signalmuster ermittelt wird.

4. Verfahren nach Anspruch 1, **dadurch gekennzeichnet, dass** im Messsignal (S) vor der ersten zu erwartenden Signalankunft das Rauschen in Spektrum und Rauschleistung analysiert wird, um einen Schwellwert in Amplitude und Anstiegszeit als Hinweis auf das Maximum (M₁, M₂, Mₙ) zu finden.

5. Verfahren nach einem der Ansprüche 1 bis 4, **dadurch gekennzeichnet, dass** innerhalb eines Messbereichs eine Vielzahl von Einzelmessungen durchgeführt werden und zur Ermittlung der Verbindungsschichtdicke (d) über diese Einzelmessungen gemittelt wird.

6. Verfahren nach Anspruch 5, **dadurch gekennzeichnet, dass** aus den ermittelten Maxima (M₁, M₂, Mₙ) der Einzelmessungen ein Histogramm der zugehörigen Gesamtlaufzeiten erstellt wird und daraus Bereiche unterschiedlicher Oberflächenstruktur ermittelt werden und für zumindest eine ermittelte Oberflächenstruktur die Verbindungsschichtdicke (d) ermittelt wird.

## Claims

1. A method for determining the layer thickness (d) of a bonding layer (5) between a first packaging layer (2) and a second packaging layer (3), wherein the first packaging layer (2) is acted upon by a laser pulse (11), and the resulting ultrasonic wave is detected at a surface of the first or second packaging layer (2, 3), and the measurement signal (S), which is detected over the time (T), is evaluated for determining the bonding layer thickness (d), **characterized in that** the transit time of the ultrasonic wave through the first and second packaging layers (2, 3) is determined in advance and a maximum (M₁, M₂, Mₙ) in the measurement signal (S) is sought, and the point in time of occurrence of this maximum (M₁, M₂, Mₙ) is determined as the total transit time (T₁, T₂, Tₙ) of the ultrasonic wave, wherein the total transit time is the transit time for passing through the two packaging layers and the bonding layer, **and that** the transit time of the ultrasonic wave through the first and second packaging layers (2, 3) is subtracted from the total transit time (T₁, T₂, Tₙ), and the thickness (d) of the bonding layer is deduced from that together with the known ultrasonic speed (vₛ) in the bonding layer (5).

2. The method according to claim 1, **characterized in that** a time window (Z) is defined in the range of the total transit time (T₁, T₂, Tₙ), and the maximum (M₁, M₂, Mₙ) is sought within this time window (Z).

3. The method according to claim 1 or 2, **characterized in that** the maximum (M₁, M₂, Mₙ) is determined by cross-correlation with a known signal pattern.

4. The method according to claim 1, **characterized in that** the noise in the spectrum and the noise power are analyzed in the measurement signal (S) before the first expected signal arrival, in order to find a threshold value in the amplitude and rise time as an indication of the maximum (M₁, M₂, Mₙ).

5. The method according to any one of claims 1 to 4, **characterized in that** a plurality of individual measurements is performed within a measurement region and averaged over these individual measurements to determine the bonding layer thickness (d).

6. The method according to claim 5, **characterized in that** a histogram of the respective total transit times is prepared from the determined maxima (M₁, M₂, Mₙ) of the individual measurements and regions of a different surface structure are determined from this, and the thickness (d) is determined for at least one surface structure thereby ascertained.

## Revendications

1. Procédé de détermination de l'épaisseur (d) d'une couche de liaison (5) entre une première couche d'emballage (2) et une deuxième couche d'emballage (3), dans lequel on soumet la première couche d'emballage (2) à une impulsion laser (11) et on détecte l'onde ultrasonore, qui est produite, sur une surface de la première ou de la deuxième couche d'emballage (2, 3) et on évalue le signal de mesure (S) détecté au cours du temps (T) afin de déterminer l'épaisseur (d) de la couche de liaison, **caractérisé en ce que** l'on détermine au préalable le temps de propagation de l'onde ultrasonore dans la première et la deuxième couche d'emballage (2, 3), on recherche un maximum (M₁, M₂, Mₙ) du signal de mesure (S) et on détermine le moment auquel ce maximum (M₁, M₂, Mₙ) apparaît comme étant le temps de propagation total (T₁, T₂, Tₙ) de l'onde ultrasonore, le temps de propagation total étant le temps de propagation dans les deux couches d'emballage et la couche de liaison, **et en ce que** l'on soustrait le temps de propagation de l'onde ultrasonore dans la première et la deuxième couche d'emballage (2, 3) du temps de propagation total (T₁, T₂, Tₙ) et, à partir de ce calcul et de la vitesse (vₛ) connue des ultrasons dans la couche de liaison (5), on déduit l'épaisseur (d) de la couche de liaison.

2. Procédé selon la revendication 1, **caractérisé en ce que** l'on définit une fenêtre temporelle (Z) dans la plage du temps de propagation total (T₁, T₂, Tₙ) et **en ce que** l'on recherche le maximum (M₁, M₂, Mₙ) à l'intérieur de cette fenêtre temporelle (Z).

3. Procédé selon la revendication 1 ou 2, **caractérisé en ce que** l'on détermine le maximum (M₁, M₂, Mₙ) par corrélation croisée avec un modèle de signal connu.

4. Procédé selon la revendication 1, **caractérisé en ce que** l'on analyse, dans le signal de mesure (S), le bruit dans le spectre et la puissance du bruit avant la première arrivée de signal attendue, pour trouver une valeur seuil de l'amplitude et du temps de montée comme indication du maximum (M₁, M₂, Mₙ) .

5. Procédé selon l'une quelconque des revendications 1 à 4, **caractérisé en ce que** l'on effectue de nombreuses mesures individuelles à l'intérieur d'une plage de mesure et on fait la moyenne de ces mesures individuelles pour déterminer l'épaisseur (d) de la couche de liaison.

6. Procédé selon la revendication 5, **caractérisé en ce que l' on** réalise un histogramme des temps de propagation totaux correspondants à partir des maximums déterminés (M₁, M₂, Mₙ) des mesures individuelles et on détermine à partir de cela des plages de structure de surface différente et on détermine l'épaisseur (d) de la couche de liaison pour au moins une structure de surface déterminée.
